# EUROPEAN PATENT APPLICATION

(11) **EP 2 360 788 A2**
(43) Date of publication of application: **24.08.2011**
(21) Application number: 11150536.8
(22) Date of filing: 11.01.2011
(51) Int. Cl.: H01Q 21/28, H01Q 1/24

(54) **Universal serial bus type wireless data card with extendable antennas**

(30) Priority: 27.01.2010 KR 20100007537
(71) Applicant: PANTECH CO., LTD., Seoul 121-270 (KR)
(72) Inventor: Kim, Joo-Sung, Incheon-si (KR); Park, Byung-Min, Gyeonggi-do (KR); Park, Sang-Don, Seoul (KR); Lee, Bong-Gu, Seoul (KR); Lee, Hyeong-Chan, Gyeonggi-do (KR)
(74) Representative: Herzog, Markus

(57) **Abstract**

A universal serial bus (USB) type wireless data card is used for wireless communication in a mulfi-in/multi-out (MIMO) environment. The USB type wireless data card includes a card body. A USB connector is installed at a first end of the card body and is connectable to a USB port of an electronic device. An antenna part includes a first antenna and a second antenna rotatable with respect to the card body to be spaced apart from the electronic device.

## Description

### CROSS-REFERENCE TO RELATED APPLICATION

This application claims priority from and the benefit under 35 U.S.C. §119(a) of Korean Patent Application No. 10-2010-0007537, filed on January 27, 2010, in the Korean Intellectual Property Office, the disclosure of which is incorporated by reference for all purposes.

### BACKGROUND

Field

The following description relates to a wireless data card, and more particularly, to a universal serial bus (USB) type wireless data card used for wireless communication.

Discussion of the Background

In general, a modem, which is a device for modulating and demodulating a sound signal or a digital signal into a signal of a radio frequency (RF) band and transmitting and receiving the signal, is used in wireless networks. A wireless data communication device in which such a modem is disposed may be referred to as a wireless data card.

The wireless data card enables a mobile phone to access the Internet through a code division multiple access (CDMA) or a wideband CDMA (WCDMA) mobile communication network. Therefore, the wireless data card enables a user to access the Internet wherever a mobile phone can be used.

The wireless data card may be classified as a USB type card, an express card, a personal computer memory card international association (PCMCIA) card, or a mini peripheral component interconnect (MiniPCI) card, depending on an interface type. An initially developed type of the wireless data card is the PCMCIA card. However, the PCMCIA card has a large size, which causes inconvenience in inserting the card into a slot in a notebook computer and in carrying the card. In recent times, as the notebook computers have become light in weight and smaller, the USB type wireless data card has become more widely used. The USB type wireless data card may be inserted into a USB port, and have a smaller size and weight.

Meanwhile, in order to increase capacity of wireless communication, a multiple input and multiple output (MIMO) technique may be utilized. The MIMO technique is a technique using a plurality of antennae in base stations and terminals, and may increase capacity in proportion to the number of antennae. In this MIMO environment, the wireless data card also includes a plurality of antennae to realize wireless data communication.

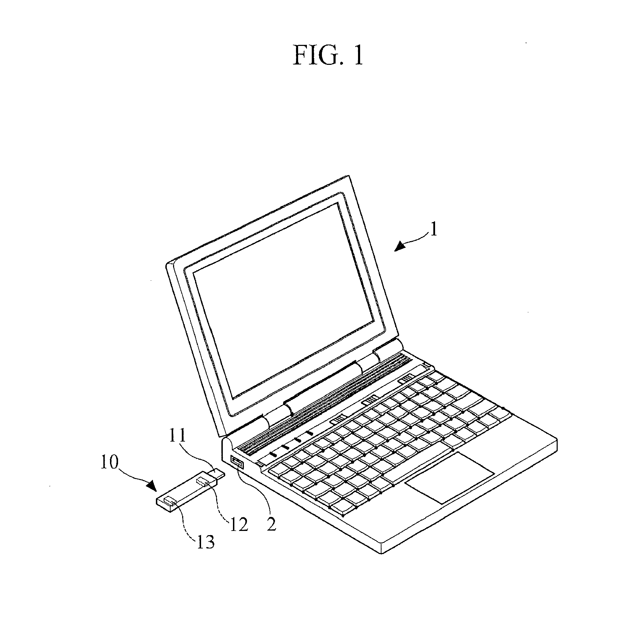

For example, as shown in FIG. 1, a conventional wireless data card 10 includes a first antenna 12, a second antenna 13, and a USB connector 11. The first antenna 12 is disposed closer to the USB connector 11 than the second antenna 13. The USB connector 11 is connected to a USB port 2 of a notebook computer 1. Therefore, in a state in which the wireless data card 10 is mounted in the notebook computer 1, radiation efficiency of the first antenna 12 adjacent to the notebook computer 1 is less than the radiation efficiency of the first antenna 12. While the first antenna 12 may be disposed near the second antenna 13, isolation may decrease as the first antenna 12 becomes nearer to the second antenna 13. This may cause decrease in performance of the wireless data card 10.

### SUMMARY

Exemplary embodiments of the present invention provide a USB type wireless data card that may be capable of improving antenna efficiency, improving isolation to improve a fading phenomenon, and increasing performance in a shadow area.

Additional features of the invention will be set forth in the description which follows, and in part will be apparent from the description, or may be learned by practice of the invention.

An exemplary embodiment provides a USB type wireless data card including a card body; a USB connector disposed at a first end of the card body; and an antenna part comprising a first antenna and a second antenna, the antenna part being rotatably connected to the card body.

It is to be understood that both the foregoing general description and the following detailed description are exemplary and explanatory and are intended to provide further explanation of the invention as claimed. Other features will become apparent to those skilled in the art from the following detailed description, which, taken in conjunction with the attached drawings, discloses exemplary embodiments of the invention.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a perspective view of an example of a conventional wireless data card.

FIG. 2 is a perspective view of a USB type wireless data card in accordance with an exemplary embodiment of the present invention.

FIG. 3 is a perspective view of the card of FIG. 2 in accordance with an exemplary embodiment of the present invention.

FIG. 4 is a perspective view of a USB type wireless data card in accordance with an exemplary embodiment of the present invention.

FIG. 5 is a perspective view of a USB type wireless data card in accordance with an exemplary embodiment of the present invention.

FIG. 6 is a perspective view of a USB type wireless data card in accordance with an exemplary embodiment of the present invention.

FIG. 7 is a perspective view of a USB type wireless data card in accordance with an exemplary embodiment of the present invention.

FIG. 8 is a perspective view of a USB type wireless data card in accordance with an exemplary embodiment of the present invention.

FIG. 9 is a graph showing return losses and isolation values of first and second antennae of the conventional wireless data card shown in FIG. 1.

FIG. 10 is a graph showing return losses and isolation values of first and second antennae of the wireless data card in accordance with an exemplary embodiment of the present invention, when the first and second antennae are rotated 90° from a card body.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity.

It will be understood that when an element, such as a layer, film, region, or substrate, is referred to as being "connected to" or "disposed" in, on, or at a region of another element, it can be connected directly to or disposed directly in, on, or at the region of the other element, or intervening elements may also be present. In contrast, when an element is referred to as being "connected directly to" or "disposed directly" in, on, or at the region of the other element, there are no intervening elements present.

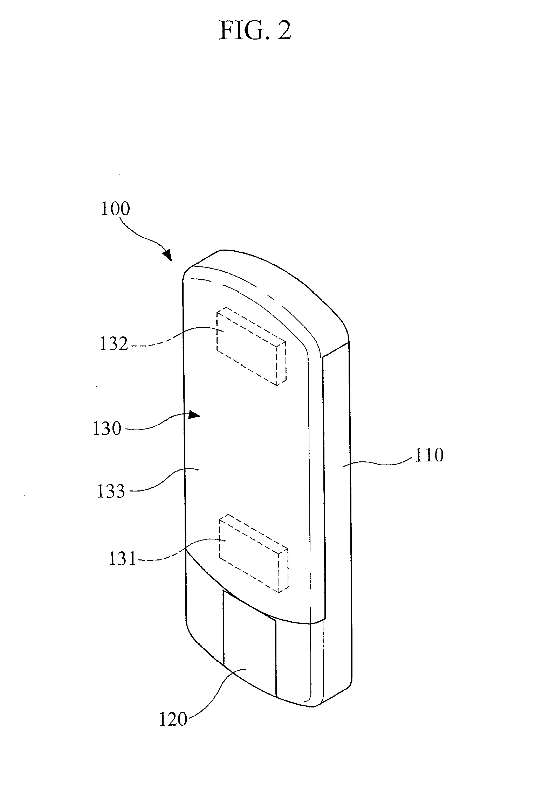

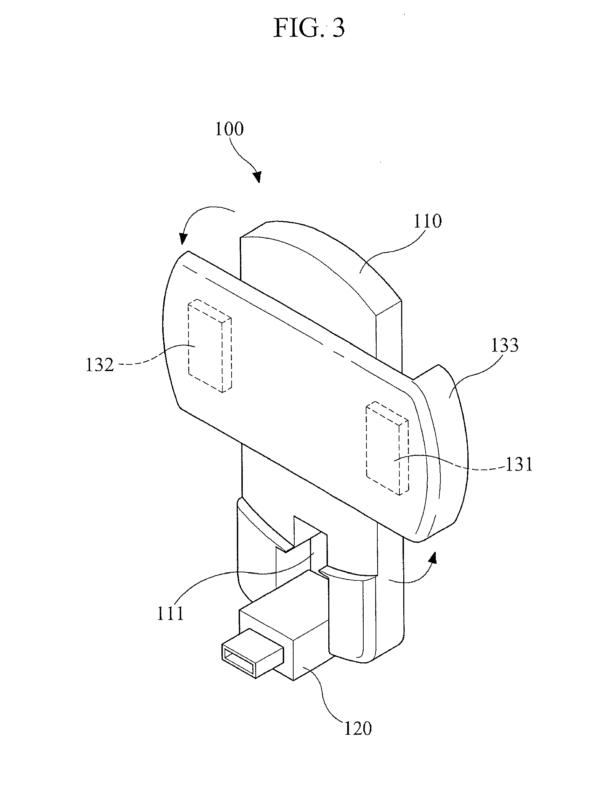

FIG. 2 is a perspective view of a USB type wireless data card in accordance with an exemplary embodiment of the present invention. FIG. 3 is a perspective view of the card of FIG. 2 in accordance with an exemplary embodiment of the present invention, in which an antenna part is rotated with respect to a card body.

Referring to FIG. 2 and FIG. 3, a USB type wireless data card 100 includes a card body 110, a USB connector 120, and an antenna part 130. The card body 110 includes a printed circuit board (not shown) including a control circuit to control the wireless data card 100 in general, etc.

The USB connector 120 is disposed at a first end of the card body 110, and connected to the printed circuit board in the card body 110. The USB connector 120 has a structure connectible to or separable from a USB port, for example, of a notebook computer. The USB connector 120 can transmit an electrical signal between the card body 110 and the notebook computer while the USB connector 120 is connected to the notebook computer.

The antenna part 130 includes a first antenna 131 and a second antenna 132. The first antenna 131 and second antennae 132 enable wireless communication in the MIMO environment. The first antenna 131 and second antennae 132 of the antenna part 130 are rotatable with respect to the card body 110 to increase a relative distance therebetween and to be spaced apart from the notebook computer.

For example, the antenna part 130 may include an antenna mounting part 133 connected to a surface of the card body 110. The antenna mounting part 133 may be rotatably connected to the card body 110 and may be connected by a hinge. Further, the antenna mounting part 133 may be connected to the card body 110 at a center portion of the antenna mounting part 133 and/or at a center portion of the card body 110. In addition, the first antenna 131 and second antennae 132 are disposed in portions adjacent to opposing ends of the antenna mounting part 133, respectively.

Further, the antenna mounting part 133 may be rotated to align with the card body 110 as shown in FIG. 2, i.e., the antenna mounting part 133 and at least a portion of the card body 110 may have similar shapes such that that antenna mounting part 133 may be rotated to align with the at least the portion of the card body 110. Additionally, the antenna mounting part 133 may be rotated 90° from the card body 110 as shown in FIG. 3, i.e., rotated to cross the card body 110.

If the first antenna 131 is closer to the notebook computer than the second antenna 132 while the antenna part 130 is rotated to align with the card body 110, the first antenna 131 may be spaced apart from the notebook computer as the antenna mounting part 133 is rotated 90°, i.e., rotated to cross the card body 110.

In addition, as the antenna part 130 is rotated, the first antenna 131 and the second antenna 132 are rotated while maintaining a distance between the first antenna 131 and the second antenna 132. Therefore, the second antenna 132 can be isolated from the first antenna 131.

The USB connector 120 may be connected to the card body 110 via a hinge to move between a state in which the USB connector 120 is received in a connector receiving groove 111 and a state in which the USB connector 120 is extended from the card body 110. In addition, the USB connector 120 may be resiliently supported by a resilient member (not shown) to receive a resilient force in a direction projecting from the connector receiving groove 111.

The USB connector 120 may be partially covered by the antenna mounting part 133 in a state in which the USB connector 120 is received in the connector receiving groove 111. In addition, the USB connector 120 may automatically or manually rotate to extend from the card body 110 to a USB port when a user rotates the antenna mounting part 133 from alignment with the card body 110.

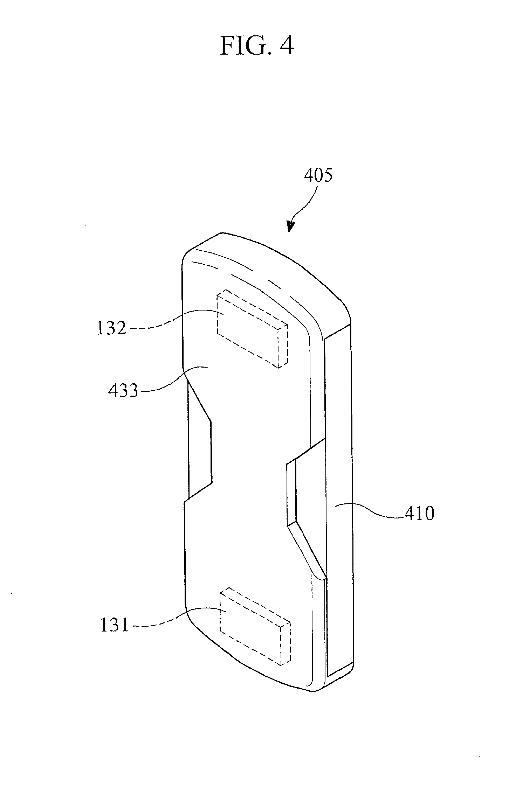

FIG. 4 is a perspective view of a USB type wireless data card in accordance with an exemplary embodiment of the present invention. As shown in FIG. 4, an antenna mounting part 433 of a USB type wireless data card 405 may have an extended structure to cover the entire USB connector 120 in a state in which the USB connector 120 is received in the connector receiving groove 111.

Meanwhile, the wireless data card 405 may be configured to turn on if the antenna mounting part 433 is rotated 90° from a card body 410, i.e., to cross the card body 410, and to turn off if the antenna mounting part 433 is rotated to the card body 410, i.e., to align with the card body 410, without pushing a separate power button.

In order to perform an on/off operation of the wireless data card 405 depending on positions of the antenna mounting part 433, a position sensor (not shown) may be arranged between the card body 410 and the antenna mounting part 433 to detect a position of the antenna mounting part 433 and output the position to the control circuit of the card body 410. In addition, the on/off operation of the wireless data card 405 as described above may be applied to any of the exemplary embodiments.

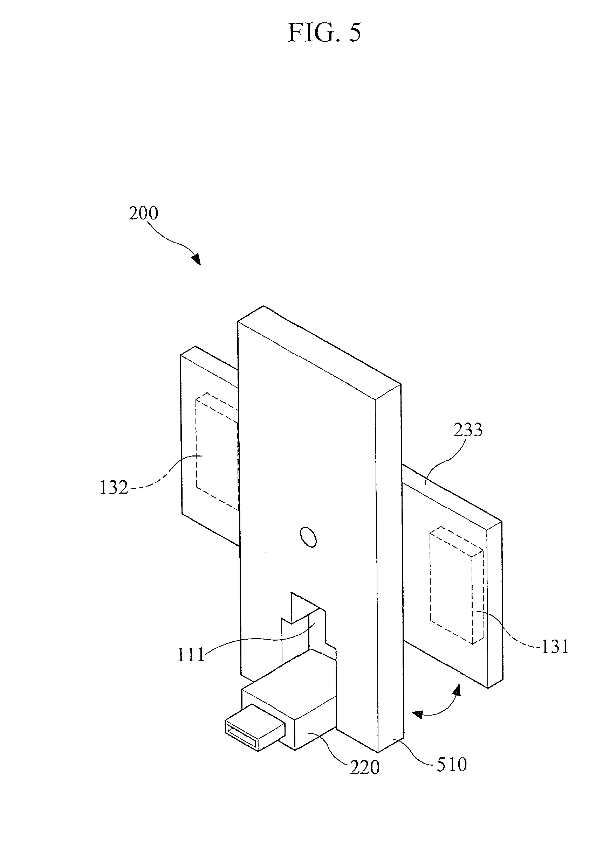

FIG. 5 is a perspective view of a USB type wireless data card in accordance with an exemplary embodiment of the present invention. Referring to FIG. 5, in a wireless data card 200, a USB connector 220 is installed to form a 90° angle with respect to a surface of the card body 510. Here, the USB connector 220 may be connected to the card body 510 via a hinge to move between a state in which the USB connector 220 is received in the connector receiving groove 111 and a state in which the USB connector 220 is extended from the card body 510.

In addition, an antenna mounting part 233 may connected to a surface of the card body 510 opposite to the surface of the card body 510 from which the USB connector 220 extends. Therefore, in a state in which the antenna mounting part 233 is rotated 90° from the card body 510, the first antenna 131 and second antennae 132 may be disposed away from the USB port to which the USB connector 220 is connected.

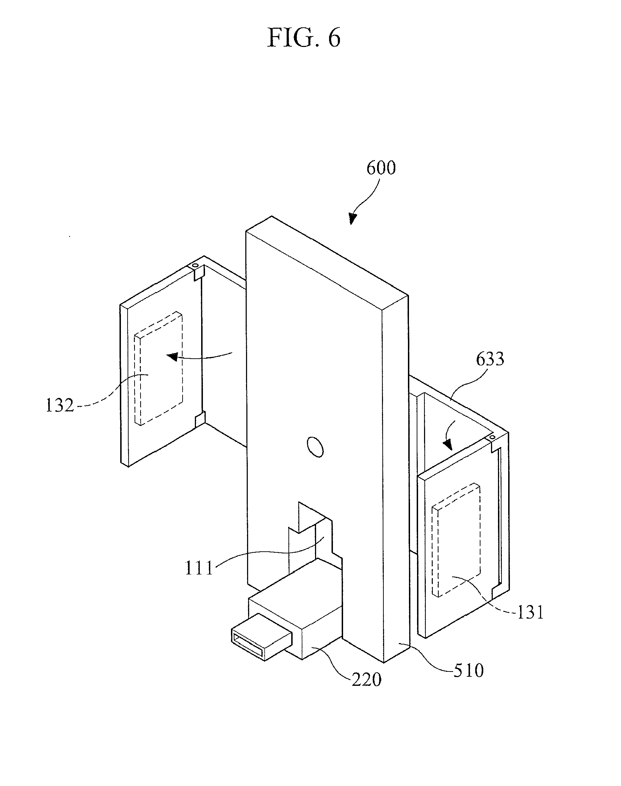

FIG. 6 is a perspective view of a USB type wireless data card in accordance with an exemplary embodiment of the present invention, in which first and second antennae are foldably connected to an antenna mounting part. As shown in FIG. 6, the first antenna 131 and second antennae 132 may be connected to or disposed in the antenna mounting part 633 of the USB type wireless data card 600 so that the first antenna 131 and second antennae 132 can be spread or unfolded to increase a distance therebetween. When the first antenna 131 and second antennae 132 are spread from the antenna mounting part 633 in a state in which the first antenna 131 and second antennae 132 are folded to the antenna mounting part 633, it is possible to increase the distance therebetween. Although FIG. 6 only shows the first antenna 131 and second antennae 132 being unfolded to about 90°, aspects are not limited thereto such that the first antenna 131 and second antennae 132 may be unfolded to an angle less than or an angle more than 90°, for example, the first antenna 131 and second antennae 132 may be unfolded to angles between about 0° and about 180°. As a further example, the first antenna 131 and second antennae 132 may be unfolded beyond 180°, such as 270° from a folded position.

While the first antenna 131 and second antennae 132 have been shown as a structure that can be folded or spread depending on rotation thereof with respect to the antenna mounting part 633, the first antenna 131 and second antennae 132 may have a structure that can be folded or spread depending on slide movement thereof with respect to the antenna mounting part 633. In addition, the structure in which the first antenna 131 and second antennae 132 can be spread from the antenna mounting part 633 may be applied to the wireless data card 600 as described above.

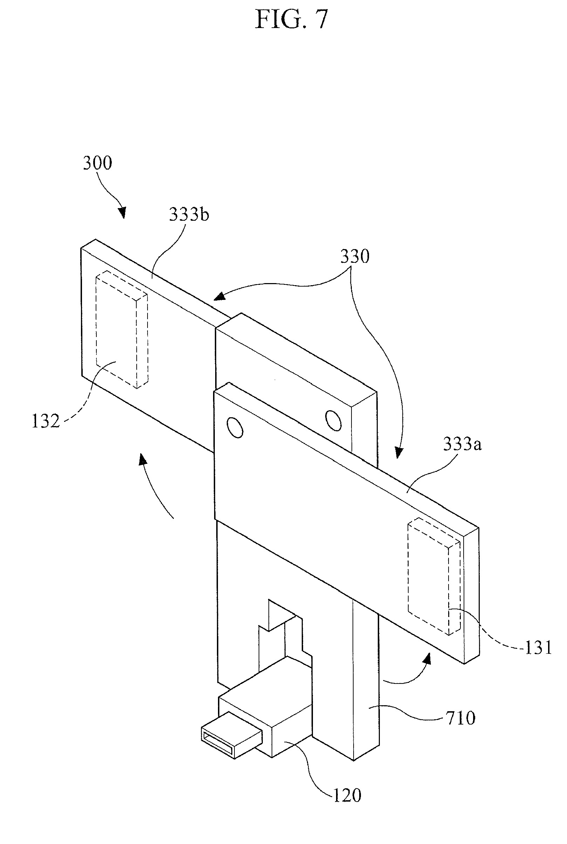

FIG. 7 is a perspective view of a USB type wireless data card in accordance with an exemplary embodiment of the present invention. Referring to FIG. 7, in a wireless data card 300, an antenna part 330 includes a first antenna mounting part 333a and a second antenna mounting part 333b. The first antenna mounting part 333a has a first end connected to a first surface of the card body 710, and a second end in which the first antenna 131 is mounted. The second antenna mounting part 333b has a first end connected to a second surface of the card body 710, and a second end in which the second antenna 132 is mounted. Each of the first ends of the first antenna mounting parts 333a and 333b may be connected to the respective first and second surfaces of the card body 710 via a common hinge or separate hinges.

The first and second antenna mounting parts 333a and 333b may be rotated to align with the card body 710, and may be spread or rotated 90° in opposite directions so that the first antenna 131 and second antennae 132 move away each other. While the first and second antenna mounting parts 333a and 333b may be asymmetrically hinged to the card body 710 at opposite surfaces of the card body 710, the first and second antenna mounting parts 333a and 333b are not limited thereto but may be symmetrically hinged to the card body 710. In addition, as shown in FIG. 5, the first antenna 131 and second antennae 132 may be spread from a state in which they are folded to the first and second antenna mounting parts 333a and 333b, in the directions that the distance therebetween is increased. Further, the USB connector 120 may be at least partially covered by the first antenna mounting part 333a when the first antenna mounting part 333a is rotated to align with the card body 710 as described above.

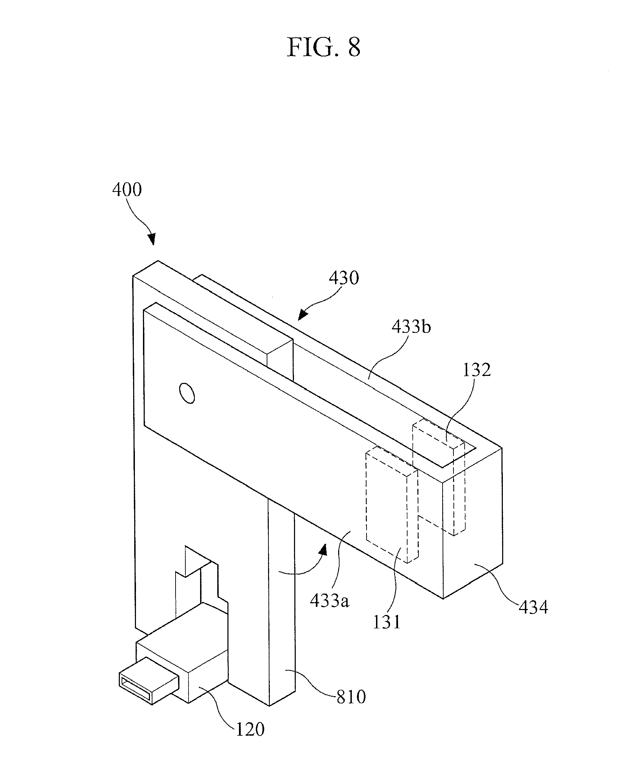

FIG. 8 is a perspective view of a USB type wireless data card in accordance with an exemplary embodiment of the present invention. Referring to FIG. 8, in a wireless data card 400, first and second antenna mounting parts 433a and 433b of an antenna part 430 are symmetrically hinged to the card body 810 at first ends of the first and second antenna mounting parts 433a and 433b. In addition, the antenna part 430 further includes a connecting part 434 to connect second ends of the first and second antenna mounting parts 433a and 433b, the second ends being opposite the first ends of the first and second antenna mounting parts 433a and 433b.

The first and second antenna mounting parts 433a and 433b can be rotated in the same direction by the connecting part 434 while the first and second antenna mounting parts 433a and 433b are rotated from the card body 810. Both ends of the connecting part 434 may be connected to a free end of the first antenna mounting part 433a and a free end of the second antenna mounting part 433b, respectively, i.e., the second ends of the first and second mounting parts 433a and 433b. In addition, the connecting part 434 is disposed such that the card body 810 can enter between the first and second antenna mounting parts 433a and 433b. Therefore, the first and second antenna mounting parts 433a and 433b may be folded to the card body 810, and may be rotated 90° from the card body 810. When the first and second antenna mounting parts 433a and 433b are rotated 90° from the card body 810, the first antenna 131 and second antennae 132 are spaced apart from the notebook computer as wells as spaced apart from each other. Although FIG. 8 shows the first and second antenna mounting parts 433a and 433b being rotated about 90° from the card body 810, aspects are not limited thereto such that the first and second antenna mounting parts 433a and 433b may be rotated more or less that 90°, for example, the first and second antenna mounting parts 433a and 433b may be rotated 180° from the card body 810.

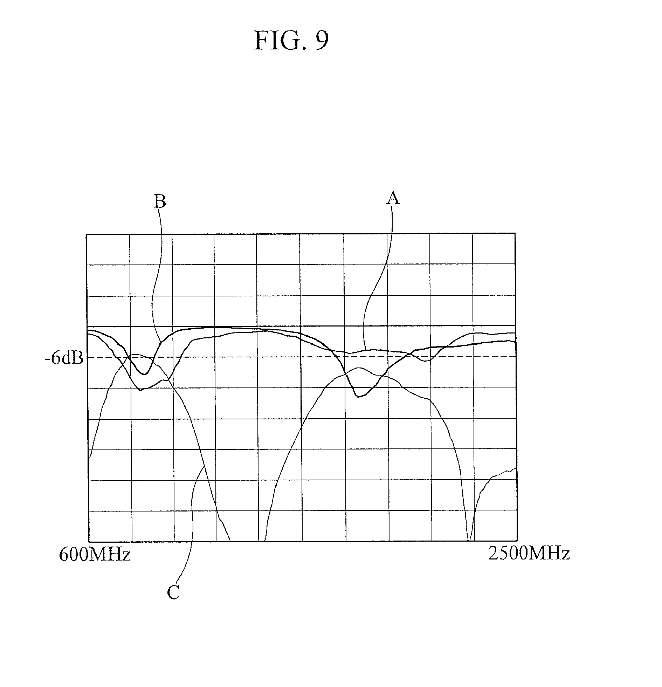

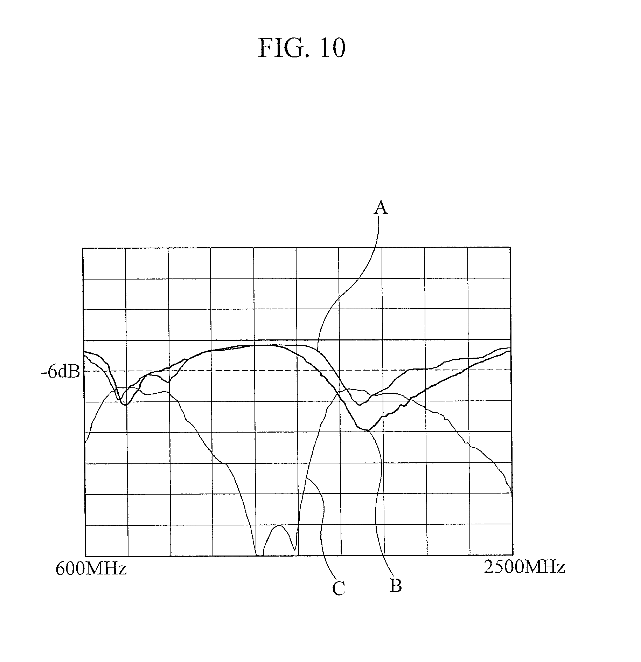

FIG. 9 and FIG. 10 are graphs for explaining radiation efficiency and isolation characteristics of the wireless data card of an exemplary embodiment, in comparison with the conventional wireless data card. Here, FIG. 9 is a graph showing return losses and isolation values of first and second antennae of the conventional wireless data card shown in FIG. 1, and FIG. 10 is a graph showing return losses and isolation values of first and second antennae of the wireless data card in accordance with an exemplary embodiment of the present invention, when the first and second antennae are rotated 90° from a card body as shown in FIG. 3.

The return loss refers to a loss due to power returned toward an inlet end by a reflective wave from the antenna. That is, as the return loss is reduced, radiation efficiency of the antenna is increased. In addition, the isolation value refers to a property value showing a level affected by the first and second antennae to each other. That is, as the isolation value is reduced, influence between the first and second antennae is also reduced.

As shown in FIG. 9 and FIG. 10, the lowest values of the return losses A and B of the first and second antennae in low and high frequency regions in FIG. 10 are lower than those of FIG. 9. In particular, the lowest value of the return loss A of the first antenna nearer the USB connector than the second antenna is lower at the high frequency region. Therefore, it will be appreciated that radiation efficiency of the first and second antennae according to an exemplary embodiment of the present invention can be improved in comparison with the conventional art.

Further, in both the low and high frequency regions, the highest values of the isolation value C in FIG. 10 are lower than those of FIG. 9. In particular, the highest value of the isolation value C in the low frequency region is lower. Therefore, it will be appreciated that isolation between the first and second antennae according to an exemplary embodiment of the present invention can be improved in comparison with the conventional art.

This application's disclosure is related to the disclosure of U.S. Application No. , filed on , having attorney docket number P3994US00, and which claims priority from and the benefit of Korean Patent Application No. 10-2010-0008804, filed on January 29, 2010, all of which are fully incorporated herein by reference.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A universal serial bus (USB) type wireless data card is used for wireless communication in a multi-in/multi-out (MIMO) environment. The USB type wireless data card includes a card body. A USB connector is installed at a first end of the card body and is connectable to a USB port of an electronic device. An antenna part includes a first antenna and a second antenna rotatable with respect to the card body to be spaced apart from the electronic device.

## Claims

1. A universal serial bus (USB) type wireless data card, comprising:
a card body;
a USB connector disposed at a first end of the card body; and
an antenna part comprising a first antenna and a second antenna, the antenna part being rotatably connected to the card body.

2. The USB type wireless data card of claim 1, wherein the antenna part further comprises:
an antenna mounting part comprising a first hinge connected to a first surface of the card body, the first antenna and the second antenna being disposed in the antenna mounting part.

3. The USB type wireless data card of claim 2, wherein the first antenna and the second antenna are disposed at opposite ends of the antenna mounting part.

4. The USB type wireless data card of claim 3, wherein the first hinge is disposed between the first antenna and the second antenna.

5. The USB type wireless data card of any of claims 2 to 4, wherein the USB connector is connected to the card body by a second hinge, and the card body comprises a receiving groove into which the USB connector is rotatable.

6. The USB type wireless data card of claim 5, wherein the antenna part covers at least a portion of the USB connector if the USB connector is rotated into the receiving groove.

7. The USB type wireless data card of claim 5 or 6, wherein the antenna part covers the USB connector if the USB connector is rotated into the receiving groove.

8. The USB type wireless data card of any of claims 2 to 7, wherein the first antenna and the second antenna are unfoldable from the antenna mounting part to increase a distance between the first antenna and the second antenna.

9. The USB type wireless data card of any of claims 1 to 8, wherein the antenna part comprises:
a first antenna mounting part comprising a first end, the first end being connected to a first surface of the card body by a first hinge, and a second end in which the first antenna is disposed; and
a second antenna mounting part comprising a first end, the first end being connected to a second surface of the card body by a second hinge, and a second end in which the second antenna is disposed.

10. The USB type wireless data card of claim 9, wherein the first antenna mounting part and the second antenna mounting part are symmetrically hinged to the card body by the first hinge and the second hinge, respectively, and
the antenna part further comprises a connecting part to connect the second end of the first antenna mounting part and the second end of the second antenna mounting part such that the card body is rotatable between the first antenna mounting part and the second antenna mounting part.

11. The USB type wireless data card of claim 9 or 10, wherein the first antenna mounting part and second antenna mounting part are asymmetrically hinged to the card body by the first hinge and the second hinge, respectively.

12. The USB type wireless data card of any of claims 9 to 11, wherein the first antenna and the second antenna are unfoldable from the antenna mounting parts to increase a distance between the first antenna and the second antenna.

13. The USB type wireless data card of any of claims 1 to 12, wherein the data card is turned on if the antenna part is rotated with respect to the card body to cross the card body, and turned off if the antenna part is rotated with respect to the card body to align with the card body.

14. The USB type wireless data card of any of claims 9 to 13, wherein the USB connector is connected to the card body by a second hinge, and the card body comprises a receiving groove into which the USB connector is rotatable.

15. The USB type wireless data card of claim 14, wherein
either at least one of the first antenna mounting part and the second antenna mounting part covers at least a portion of the USB connector if the USB connector is rotated into the receiving groove,
or each of the first antenna mounting part and the second antenna mounting part covers the USB connector if the USB connector is rotated into the receiving groove.
